# EUROPÄISCHE PATENTSCHRIFT

(11) **EP 3 042 064 B1**
(45) Veröffentlichungstag und Bekanntmachung des Hinweises auf die Patenterteilung: **10.05.2017**
(21) Anmeldenummer: 14766924.6
(22) Anmeldetag: 02.09.2014
(51) Int. Cl.: F02M 35/12, F16L 55/033

(54) **RESONATOR**
RESONATOR
RÉSONATEUR

(30) Priorität: 03.09.2013 DE 202013103960 U
(43) Veröffentlichungstag der Anmeldung: 13.07.2016
(73) Patentinhaber: Umfotec GmbH, 37154 Northeim (DE); Denker, Dietrich, 73760 Ostfildern (DE)
(72) Erfinder: GRIESWALD, André, 33613 Bielefeld (DE); FISCHER, Jens, 25337 Kölln-Reisiek (DE)
(74) Vertreter: Schneider, Peter Christian
(86) Internationale Anmeldenummer: PCT/EP2014/068621
(87) Internationale Veröffentlichungsnummer: WO 2015/032757

(56) Entgegenhaltungen:
- EP-A1- 2 067 979
- DE-A1- 19 956 172
- DE-A1-102008 032 491
- DE-U1- 29 825 193

## Beschreibung

### Gebiet der Erfindung

Die Erfindung betrifft einen Resonator zur Absenkung von Luft- und Körperschall mit mindestens zwei zwischen einem Einlassstück und einem Auslassstück angeordneten Ringkammern und einem mindestens zwischen Einlassstück uns Auslassstück angeordneten Innenrohr mit Wanddurchbrüchen als Verbindung zu den benachbarten Ringkammern.

Bei Verwendung von beispielsweise Abgasturboladern in Verbindung mit Verbrennungsmotoren kommt es in Folge von Drehzahlen, Unwuchten und Störungen durch fertigungsbedingte Verzüge zu unerwünschten Strömungsgeräuschen. Diese Strömungsgeräusche werden durch entsprechende Resonatoren bzw. Dämpfer breitbandig abgesenkt. Die Resonatoren bzw. die Dämpfer sind insbesondere zwischen Turbolader und Verbrennungsmaschine bzw. zwischen Turbolader und einem der Verbrennungsmaschine vorgelagerten Luftkühler angeordnet.

### Stand der Technik

Ein Resonator oder Rohrkammerdämpfer ist beispielsweise aus der DE 19 55 708 B4 bekannt. Die bekannte Vorrichtung weist zwischen einem Einlassstück und einem Auslassstück zwei einander benachbarte Ringkammern und ein zwischen Einlassstück und Auslassstück angeordnetes Innenrohr mit schlitzförmigen Wanddurchbrüchen als Verbindung zu den das Innenrohr umgebenden Ringkammern auf.

Nachteilig bei dem bekannten Resonator, der sich grundsätzlich bewährt hat, ist das er bei veränderten Einsatzbedingungen, d.h. bei verändertem Einbauvolumen und bei veränderten Dämpfungseigenschaften jeweils komplett neu aufgebaut werden muss, was insbesondere zu relativ hohen Werkzeugkosten führt.

Ein ähnlicher Resonator ist auch aus der DE 10 2004 049 446 A1 bekannt. Bei dieser bekannten Vorrichtung bilden Einlassstück, Auslassstück, Volumenkammer und Auslassrohr eine Rohrdämpfereinheit, die einstückig aus einem Kunststoff geformt ist. Das Innenrohr ist dabei von dem Einlassstück her in die Rohrdämpfereinheit einsteckbar.

### Aufgabenstellung

Aufgabe der vorliegenden Erfindung ist es daher, die bekannten Resonatoren so zu verbessern, dass sie einfach und kostengünstig an unterschiedliche Einsatzorte und Dämpfungsbedingungen angepasst werden können.

### Darlegung der Erfindung

Diese Aufgabe wird in Verbindung mit den Merkmalen des Oberbegriffs von Anspruch 1 dadurch gelöst, dass eine erste Ringkammer koaxial zur Resonatorlängsachse eine u-förmige, umlaufende Wandung aufweist, die zu beiden Seiten in zylindrische Endstücke zur Aufnahme des Innenrohres übergeht, dass mindestens eine zweite Ringkammer koaxial zur Resonatorlängsachse eine I-förmige, umlaufende Wandung aufweist, die an ihrem der ersten Ringkammer abgewandten Ende in ein zylindrisches Endstück übergeht und die an ihrem der ersten Ringkammer zugewandten Ende auf der parallel zur Resonatorlängsachse verlaufenden Außenwandung der ersten Ringkammer aufliegt.

Durch den Verzicht auf die einteilige Ausbildung der Kammern und durch die Zusammensetzung der Ringkammern aus mindestens einer u-förmigen und einer I-förmigen Kammer, lassen sich die einzelnen Kammern mit geringeren Werkzeugkosten zum Einen kostengünstiger fertigen und zum Anderen durch ihren modularen Aufbau einfacher und kostengünstiger an unterschiedliche Bauräume und unterschiedliche Dämpfungsbedingungen anpassen. Insbesondere die ersten und dritten Ringkammern mit I-förmiger Wandung lassen sich leicht in ihrer parallel zur Resonatorlängsachse verlaufenden Breite verändern. Eine weitere einfache und kostengünstige Variierung der Dämpfungseigenschaften kann über die Anzahl und Geometrie der den Ringkammern zugeordneten Wanddurchbrüche in dem Innenrohr erzielt werden. Grundsätzlich ergibt sich die vorgesehene Dämpfung aus den Volumina der Ringkammern und aus der Größe der Wanddurchbrüche im Innenrohr, die den Innenraum des Innenrohres mit den Volumenkammern verbinden. Um eine breitbandige Dämpfung zu erhalten, ist es von Vorteil, die Ringkammern mit unterschiedlichen Volumen und entsprechenden Wanddurchbrüchen im Innenrohr auszubilden und aufeinander abzustimmen. Durch die entsprechende Anpassung der Wanddurchbrüche an die Volumina der Volumenkammern entstehen die bekannten Wirkmechanismen in der Art von Helmholtz und / oder λ/4-Resonatoren, die der Schallminderung der Gesamtanordnung dienen.

Durch die gewählte Ausbildung der Ringkammern und des Innenrohres wird durch nicht werkzeug- oder formgebundene Herstellungsverfahren, die eine schnelle und einfache Anpassung ermöglichen, eine besonders hohe Flexibilität der Fertigung erzielt. Unter den nicht werkzeug- oder formgebundene Herstellungsverfahren sollen Verfahren wie Schweißen, Lasern, Schneiden, Druckbeaufschlagung von Halbzeugrohren, Blasformtechniken, Tiefziehen etc. verstanden werden. Beispielsweise kann die erste und dritte Ringkammer einteilig, beispielsweise durch Druckbeaufschlagung, umgeformt werden und in einem nachfolgenden Arbeitsgang durch Schneiden oder ein anderes Trennverfahren in die erste und dritte Ringkammer zerlegt werden.

Gemäß einer bevorzugten Ausführungsform der Erfindung ist eine dritte Ringkammer vorgesehen, die koaxial zur Resonatorlängsachse eine I-förmige, umlaufende Wandung aufweist, die an ihrem der ersten Ringkammer abgewandtem Ende in ein zylindrisches Endstück übergeht. Mit ihrem der u-förmigen Kammer zugewandten Ende liegt die I-förmige, umlaufende Wandung der I-förmigen Ringkammer auf der parallel zur Resonatorlängsachse verlaufenden Außenwandung der ersten Ringkammer auf. Damit lässt sich relativ einfach ein Resonator mit drei Ringkammern erreichen bei dem mittlere Ringkammer koaxial zur Resonatorlängsachse eine u-förmige, umlaufende Wandung und die beiden außen liegenden Ringkammern jeweils eine I-förmige, umlaufende Außenwandung aufweisen.

Gemäß einer weiteren bevorzugten Ausführungsform der Erfindung ist das zylindrische Endstück der jeweiligen Ringkammer, umlaufender Wandung als Aufnahme des Innenrohres ausgebildet. Grundsätzlich kann das zylindrische Endstück der jeweiligen I-förmigen Ringkammer aber auch als Aufnahme für das Einlassstück oder für das Auslassstück ausgebildet sein. Dabei ist dann das Einlassstück und/oder das Auslassstück als Aufnahme des Innenrohres ausgebildet.

Gemäß einer weiteren bevorzugten Ausführungsform der Erfindung sind die Wanddurchbrüche als den Ringkammern zugeordnete Schlitze ausgebildet. Die Dimension, Anordnung und Zahl der Schlitze wird entsprechend den geforderten Dämpfungseigenschaften ermittelt. Damit lassen die Innenrohre sich ebenfalls relativ einfach und kostengünstig an veränderte Bedingungen anpassen.

Nach einer weiteren bevorzugten Ausführungsform der Erfindung ist das Innenrohr mindestens an einem Ende außerhalb der Ringkammern als Teil der Luft- oder Gasführung ausgebildet. Dabei kann das Innenrohr an seinem außerhalb der Ringkammern angeordneten Ende abgewinkelt sein, wobei am freien Ende des Innenrohres ein Anschlussflansch angeordnet ist.

Durch den modularen Aufbau des Resonators können bei vorgegebenen Einbauvolumen die Ringkammern und das Innenrohr mit seinen Durchbrüchen relativ einfach und kostengünstig auf die vorgegebenen Dämpfungseigenschaften abgestimmt werden.

Die Resonatoren können aus Kunststoff, Stahl oder anderen zulässigen Materialien oder Kombinationen davon ausgebildet werden.

Bevorzugte Ausführungsformen sind Gegenstand der abhängigen Ansprüche.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine aufgeschnittene räumliche Darstellung eines Resonators zur Absenkung von Luft- und Körperschall in einer Ausführung mit drei Ringkammern,
- Figur 2:: den Resonator von Figur 1 als Explosionszeichnung,
- Figur 3:: eine Seitenansicht im Schnitt eines weiteren Resonators mit drei Ringkammern,
- Figur 4:: eine Seitenansicht im Schnitt eines weiteren Resonators mit drei Ringkammern und modifizierten schlitzförmigen Wanddurchbrüchen,
- Figur 5:: eine Seitenansicht eines weiteren Resonators mit drei Ringkammern und modifizierten schlitzförmigen Wanddurchbrüchen,
- Figur 6:: eine Seitenansicht im Schnitt eines weiteren Resonators mit zwei Ringkammern.

### Beschreibung bevorzugter Ausführungsformen

Eine Resonator 1 zur Absenkung von Luft- und Körperschall besteht im Wesentlichen aus einer ersten Ringkammer 2, einer zweiten Ringkammer 3 und einem Innenrohr 4.

Die erste Ringkammer 2 ist koaxial zu einer Resonatorlängsachse 5 angeordnet und weist eine im Wesentlichen u-förmige, umlaufende Wandung 6 auf, die zu beiden Seiten in zylindrische Endstücke 7, 8 übergeht. Die u-förmige Wandung 6 weist eine parallel zur Resonatorlängsachse 5 verlaufende Außenwandung 9 auf, die durch zwei quer zur Resonatorlängsachse 5 angeordnete ringförmige Seitenwandungen 10, 11 begrenzt wird. Über die Seitenwandungen 10, 11 geht die Außenwandung 9 in die Endstücke 7, 8 über.

Die zweite Ringkammer 3 weist eine koaxial zur Resonatorlängsachse 5 umlaufende I-förmige Wandung 12 auf, die an ihrem der ersten Ringkammer 2 abgewandten Ende in ein zylindrisches Endstück 13 übergeht. Die I-förmige Wandung 12 liegt an ihrem der ersten Ringkammer 2 zugewandten Ende 14 auf der Außenwandung 9 der ersten Ringkammer 2 auf. Die I-förmige Wandung 12 der zweiten Ringkammer 3 weist eine parallel zur Resonatorlängsachse 5 verlaufende Außenwandung 15 mit dem der ersten Ringkammer zugewandten Ende 14 auf. Zu dem Endstück 13 der zweiten Ringkammer hin wird die Außenwandung 15 durch eine quer zur Resonatorlängsachse 5 verlaufende Seitenwandung 16 begrenzt, die in das Endstück 13 der zweiten Ringkammer 3 übergeht. Damit wird die zweite Seitenwandung der zweiten Ringkammer 3 von der zweiten Seitenwandung 11 der ersten Ringkammer 2 gebildet.

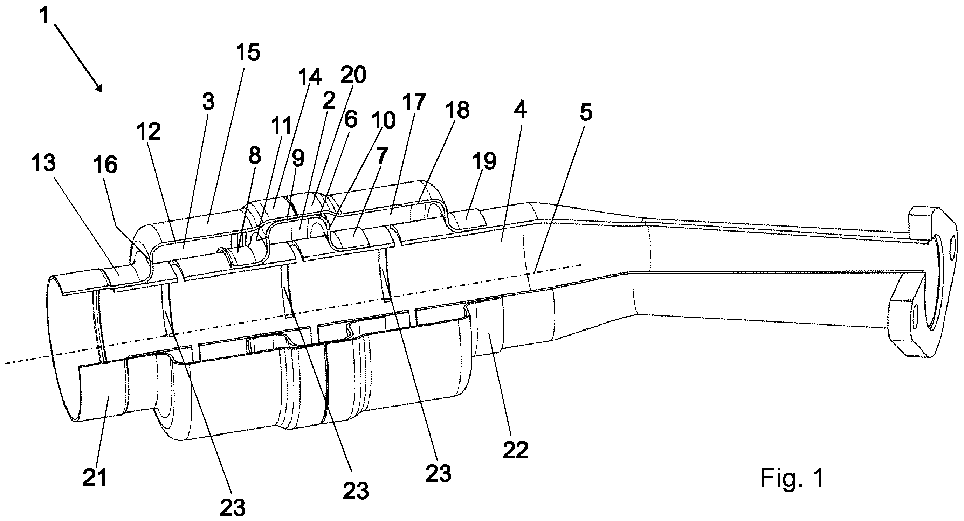

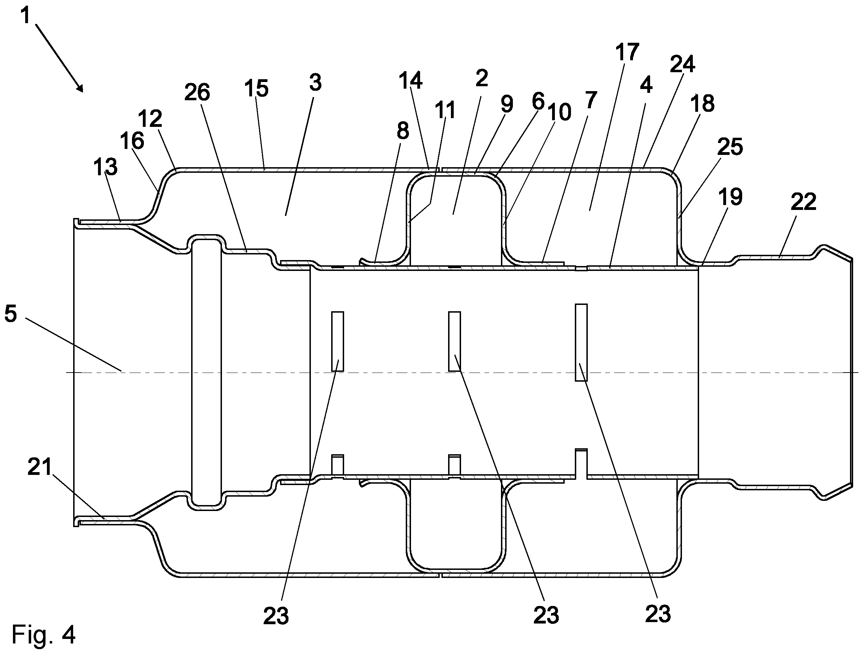

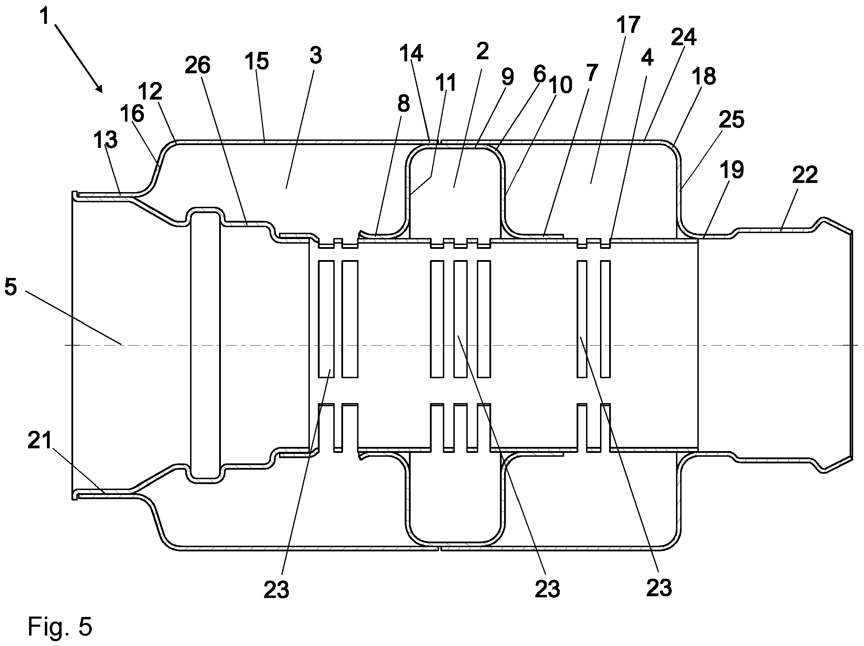

Entsprechend den Ausführungsbeispielen der Figuren 1 bis 5 ist eine dritte Ringkammer 17 vorgesehen, die koaxial zur Resonatorlängsachse 5, ebenfalls eine I-förmige, umlaufende Wandung 18 aufweist, die an ihrem der ersten Ringkammer 2 abgewandten Ende in ein zylindrischen Endstück 19 übergeht und die mit ihrer Außenwandung 24 an ihrem der ersten Ringkammer 2 zugewandten Ende 20 auf der Außenwandung 9 der ersten Ringkammer 2 bzw. u-förmigen Wandung 6 aufliegt. Die Außenwandung 24 geht über eine Seitenwandung 25 in das Endstück 19 über. Damit entspricht die dritte Ringkammer 17 im Wesentlichen der zweiten Ringkammer 3, wird aber in der Regel eine andere Längenausdehnung in Richtung der Resonatorlängsachse 5 aufweisen.

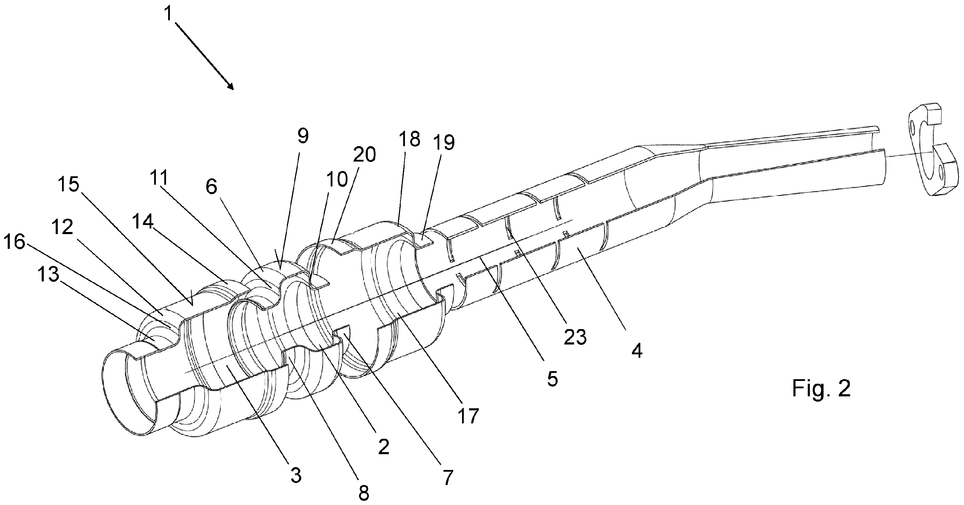

Entsprechend dem Ausführungsbeispiel der Figuren 1 und 2 sind die zylindrischen Endstücke 7, 8, 13,19 als Aufnahme für das Innenrohr 4 ausgebildet, d.h. das Innenrohr 4 ist in die Endstücke 7, 8, 13, 19 einsteckbar.

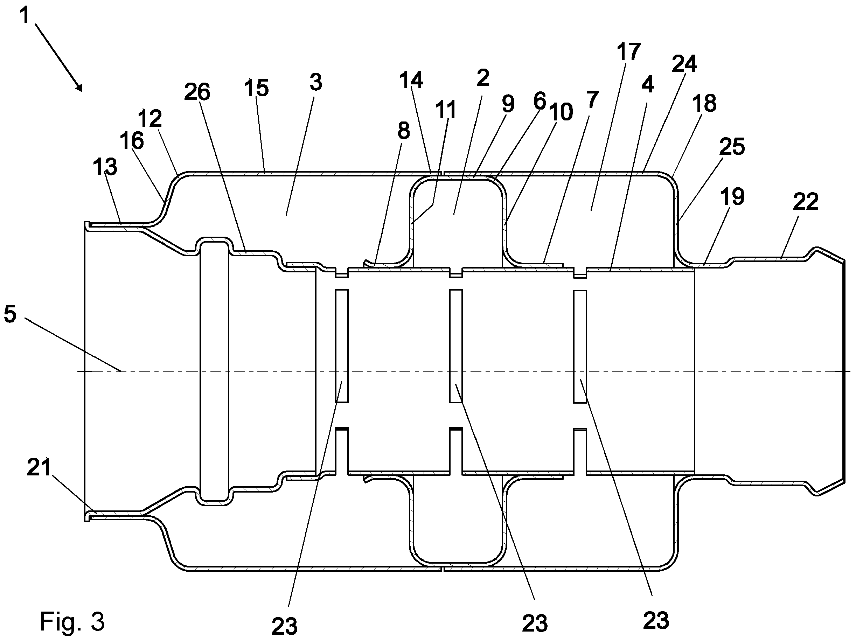

Entsprechend den Ausführungsbeispielen der Figuren 3 bis 5 sind die Endstücke 7,8 und 19 der Ringkammern 2, 17 als Aufnahme des Innenrohres 4 ausgebildet. Das Endstück 13 der zweiten Ringkammer 3 ist als Aufnahme für ein Auslassstück 21 ausgebildet, das mit dem Innenrohr 4 verbunden ist. Das Endstück 19 der dritten Ringkammer 17 geht entsprechend den Ausführungsbeispielen der Figuren 1 bis 5 in das Einlassstück 22 über.

Entsprechend dem Ausführungsbeispiel der Figuren 1 und 2 wird das Einlassstück 22 von dem Endstück 19 der dritten Ringkammer 17 und das Auslassstück 21 vom dem Endstück 13 der zweiten Ringkammer gebildet.

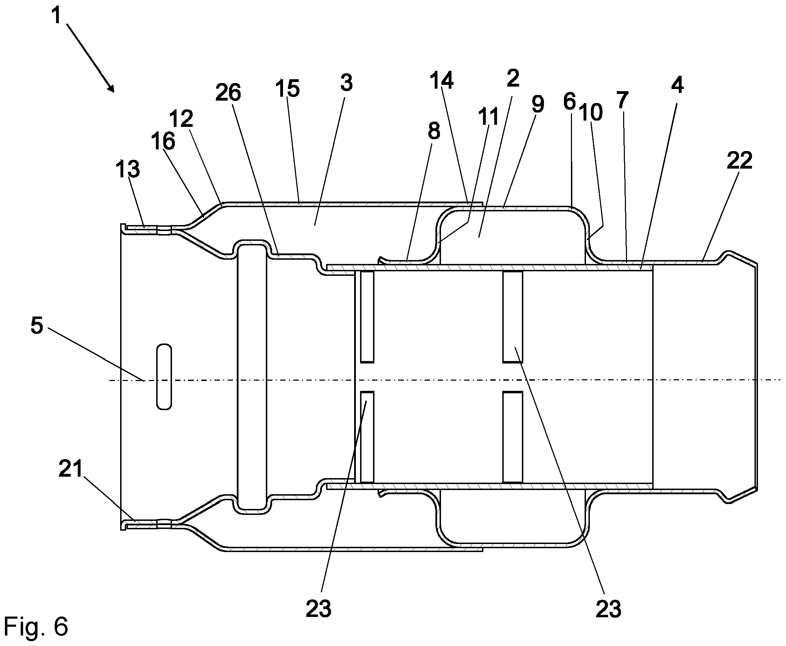

Entsprechend dem Ausführungsbeispiel der Figur 6 wird das Einlassstück 22 von dem ersten Endstück 7 der ersten Ringkammer 2 gebildet. Das Endstück 13 der zweiten Ringkammer ist als Aufnahme für das Auslassstück 21 ausgebildet, das seinerseits mit dem Innenrohr verbindbar ist.

Das Innenrohr 4 weist zu den Ringkammern 2, 3, 17 hin Wanddurchbrüche 23 als Verbindung auf. In den Ausführungsbeispielen der Figuren 1 bis 6 sind die Wanddurchbrüche 23 als Schlitze ausgebildet.

Entsprechend den Ausführungsbeispielen der Figuren 3 bis 6 ist das Innenrohr 4 mit einem sich stufenförmig zum Auslassstück 21 hin erweiternden zweiten Innenrohr 26 verbunden.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Insbesondere können noch weitere Ringkammern oder noch andere Volumenkammern hinzugefügt werden. Auch ist es möglich, Einlass-und Auslass zu vertauschen und so die Strömungsrichtung umzukehren. Schließlich ist es auch möglich, das Innenrohr aufzuteilen und an Stelle eines schlitzförmigen Wanddurchbruches einen Spalt zu bilden.

### Bezugszeichenliste

- 1: Resonator
- 2: erste Ringkammer
- 3: zweite Ringkammer
- 4: Innenrohr
- 5: Resonatorlängsachse von 1
- 6: u-förmige Wandung von 2
- 7: erstes Endstück von 2
- 8: zweites Endstück von 2
- 9: Außenwandung von 6
- 10: erste Seitenwandung von 6
- 11: zweite Seitenwandung von 6
- 12: I-förmige Wandung von 3
- 13: Endstück von 3
- 14: Ende von 12
- 15: Außenwandung von 12
- 16: Seitenwandung von 12
- 17: dritte Ringkammer
- 18: I-förmige Wandung von 17
- 19: Endstück von 17
- 20: Ende von 18
- 21: Auslassstück
- 22: Einlassstück
- 23: Wanddurchbruch
- 24: Außenwandung
- 25: Seitenwandung von 18
- 26: zweites Innenrohr

## Patentansprüche

1. Resonator (1) zur Absenkung von Luft- und Körperschall mit mindestens zwei zwischen einem Einlassstück (22) und einem Auslassstück (21) angeordneten Ringkammern (2, 3, 17) und einem mindestens zwischen Einlassstück (22) und Auslassstück (21) angeordneten Innenrohr (4) mit Wanddurchbrüchen (23) als Verbindung zu den benachbarten Ringkammern (2, 3, 17)
**dadurch gekennzeichnet,**
**dass** eine erste Ringkammer (2) koaxial zur Resonatorlängsachse (5) eine u-förmige, umlaufende Wandung (6) aufweist, die zu beiden Seiten in zylindrische Endstücke (7, 8) zur Aufnahme des Innenrohres (4) übergeht,
**dass** mindestens eine zweite Ringkammer (3) koaxial zur Resonatorlängsachse (5) eine I-förmige, umlaufende Wandung (12) aufweist, die an ihrem der ersten Ringkammer (2) abgewandten Ende in ein zylindrisches Endstück (13) übergeht und die an ihrem der ersten Ringkammer (2) zugewandten Ende (14) auf den parallel zur Resonatorlängsachse (5) verlaufenden Teil der Außenwandung (9) der ersten Ringkammer (2) aufliegt.

2. Resonator nach Anspruch 1,
**dadurch gekennzeichnet,**
**dass** eine dritte Ringkammer (17) vorgesehen ist, die koaxial zur Resonatorlängsachse (5) eine I-förmige, umlaufende Wandung (18) aufweist, die an ihrem der ersten Ringkammer (2) abgewandten Ende in ein zylindrisches Endstück (19) übergeht und die an ihrem der ersten Ringkammer (2) zugewandten Ende (20) auf den parallel zur Resonatorlängsachse (5) verlaufenden Teil der Außenwandung (9) der ersten Ringkammer (2) aufliegt.

3. Resonator nach Anspruch 1 oder 2
**dadurch gekennzeichnet,**
**dass** das zylindrische Endstück der jeweiligen Ringkammer (3, 17) mit I-förmig umlaufender Wandung (12, 18) als Aufnahme des Innenrohres (4) ausgebildet ist.

4. Resonator nach Anspruch 1 oder 2
**dadurch gekennzeichnet,**
**dass** das zylindrische Endstück (13, 19) der jeweiligen Ringkammer (3, 17) mit I-förmig umlaufender Wandung (12, 18) als Aufnahme für das Einlassstück (22) oder für das Auslassstück (21) ausgebildet ist.

5. Resonator nach Anspruch 4
**dadurch gekennzeichnet,**
**dass** das Einlassstück (22) und/oder das Auslassstück (21) als Aufnahme des Innenrohres (4) ausgebildet ist.

6. Resonator nach einem der Ansprüche 1 bis 5
**dadurch gekennzeichnet,**
**dass** die Wanddurchbrüche (23) als den Ringkammern (2, 3, 17) zugeordnete Schlitze ausgebildet sind.

7. Resonator nach einem der Ansprüche 1 bis 6
**dadurch gekennzeichnet,**
**dass** das Innenrohr (4) mindestens an einem Ende außerhalb der Ringkammern (2, 3, 17) als Teil der Luft- oder Gasführung ausgebildet ist.

8. Resonator nach Anspruch 7
**dadurch gekennzeichnet,**
**dass** das Innenrohr (4) an seinem außerhalb der Ringkammern (2, 3, 17) angeordneten Ende abgewinkelt ist.

9. Resonator nach Anspruch 7 oder 8
**dadurch gekennzeichnet,**
**dass** am freien Ende des Innenrohres (4) ein Anschlussflansch angeordnet ist.

10. Resonator nach einem der Ansprüche 1 bis 9
**dadurch gekennzeichnet,**
**dass** bei vorgegebenen Einbauvolumen die Ringkammern (2, 3, 17) und das Innenrohr (4) mit seinen Wanddurchbrüchen (23) auf die vorgegebenen Dämpfungseigenschaften abgestimmt sind.

## Claims

1. A resonator (1) for lowering airborne sound and solid-borne sound, comprising at least two annular chambers (2, 3, 17) arranged between an inlet piece (22) and an outlet piece (21) and also comprising an inner pipe (4), which is arranged at least between the inlet piece (22) and the outlet piece (21) and which has wall holes (23) as a connection to the adjacent annular chambers (2, 3, 17),
**characterised in that,**
coaxial to the resonator longitudinal axis (5), a first annular chamber (2) has a U-shaped circumferential wall (6) which transitions at both ends into cylindrical end pieces (7, 8) to accommodate the inner pipe (4), and
**in that**, coaxial to the resonator longitudinal axis (5), at least one second annular chamber (3) has an L-shaped circumferential wall (12) which, at its end facing away from the first annular chamber (2), transitions into a cylindrical end piece (13), and which, at its end (14) facing the first annular chamber (2), rests on the part of the outer wall (9), extending parallel to the resonator longitudinal axis (5), of the first annular chamber (2).

2. The resonator according to Claim 1,
**characterised in that**,
there is provided a third annular chamber (17) having, coaxial to the resonator longitudinal axis (5), an L-shaped circumferential wall (18) which, at its end facing away from the first annular chamber (2), transitions into a cylindrical end piece (19) and which, at its end (20) facing the first annular chamber (2), rests on the part of the outer wall (9), extending parallel to the resonator longitudinal axis (5), of the first annular chamber (2).

3. The resonator according to Claims 1 or 2,
**characterised in that**,
the cylindrical end piece (13, 19) of the respective annual chamber (3, 17) is designed with an L-shaped circumferential wall (12, 18) to accommodate the inner pipe (4).

4. The resonator according to Claims 1 or 2,
**characterised in that**,
the cylindrical end piece (13, 19) of the respective annular chamber (3, 17) is designed with an L-shaped circumferential wall (12, 18) to accommodate the inlet piece (22) or the outlet piece (21).

5. The resonator according to Claim 4,
**characterised in that**,
the inlet piece (22) and/or the outlet piece (21) is designed to accommodate the inner pipe (4).

6. The resonator according to any of Claims 1 to 5,
**characterised in that**,
the wall holes (23) are designed as slits that are assigned to the annular chambers (2, 3, 17).

7. The resonator according to any of Claims 1 to 6,
**characterised in that**,
at least at one end outside of the annular chambers (2, 3, 17) the inner pipe (4) is designed as part of the air or gas supply system.

8. The resonator according to Claim 7,
**characterised in that**
the inner pipe (4) is angled at its end that is located outside of the annular chambers (2, 3, 17).

9. The resonator according to Claims 7 or 8,
**characterised in that**
a connection flange is arranged at the free end of the inner pipe (4).

10. The resonator according to any of Claims 1 to 9,
**characterised in that**
for predetermined installation volumes, the annular chambers (2, 3, 17) and the inner pipe (4) with its wall holes (23) are matched to the required damping characteristics.

## Revendications

1. Résonateur (1) permettant de réduire le bruit aérien et le bruit de structure, comportant au moins deux chambres annulaires (2, 3, 17) agencées entre un élément d'entrée (22) et un élément de sortie (21), et un tube intérieur (4) agencé au moins entre l'élément d'entrée (22) et l'élément de sortie (21) et présentant des ouvertures de paroi (23) communiquant avec les chambres annulaires adjacentes (2, 3, 17),
**caractérisé en ce qu'**une première chambre annulaire (2) présente une paroi (6) en U s'étendant coaxialement par rapport à l'axe longitudinal (5) du résonateur et se prolongeant des deux côtés en éléments d'extrémité cylindriques (7, 8) recevant le tube intérieur (4),
**en ce qu'**au moins une deuxième chambre annulaire (3) présente une paroi (12) en U s'étendant coaxialement par rapport à l'axe longitudinal (5) du résonateur, se prolongeant en un élément d'extrémité cylindrique (13) au niveau de son extrémité opposée à la première chambre annulaire (2), et prenant appui au niveau de son extrémité (14) tournée vers la première chambre annulaire (2) sur une partie de la paroi extérieure (9), parallèle à l'axe longitudinal (5) du résonateur, de la première chambre annulaire (2).

2. Résonateur selon la revendication 1 **caractérisé en ce qu'**est pourvue une troisième chambre annulaire (17) qui présente une paroi (18) en L s'étendant coaxialement par rapport à l'axe longitudinal (5) du résonateur, se prolongeant en un élément d'extrémité cylindrique (19) au niveau de son extrémité opposée à la première chambre annulaire (2), et prenant appui, au niveau de son extrémité (20) tournée vers la première chambre annulaire (2), sur la partie de la paroi extérieure (9), parallèle à l'axe longitudinal (5) du résonateur, de la première chambre annulaire (2).

3. Résonateur selon les revendications 1 ou 2, **caractérisé en ce que** l'élément d'extrémité cylindrique (13, 19) de la chambre annulaire respective (3, 17) est conçue sous forme d'un L (12, 18) pour recevoir le tube intérieur (4).

4. Résonateur selon les revendications 1 ou 2, **caractérisé en ce que** l'élément d'extrémité cylindrique (13, 19) de la chambre annulaire respective (3, 17) est sous forme d'un L (12, 18) pour recevoir l'élément d'entrée (22) ou l'élément de sortie (21).

5. Résonateur selon la revendication 4, **caractérisé en ce que** l'élément d'entrée (22) et/ou l'élément de sortie (21) est conçu pour recevoir le tube intérieur (4).

6. Résonateur selon une quelconque des revendications 1 à 5, **caractérisé en ce que** les ouvertures de paroi (23) sont conçues sous forme de fentes affectées aux chambres annulaires (2, 3, 17).

7. Résonateur selon une quelconque des revendications 1 à 6, **caractérisé en ce que** le tube intérieur (4) est conçu, au niveau d'au moins une extrémité à l'extérieur des chambres annulaires (2, 3, 17), comme partie du système d'alimentation en air ou en gaz.

8. Résonateur selon la revendication 7, **caractérisé en ce que** le tube intérieur (4) présente un angle au niveau de son extrémité située à l'extérieur des chambres annulaires (2, 3, 17).

9. Résonateur selon les revendications 7 ou 8, **caractérisé en ce qu'**une bride de raccordement est agencée à l'extrémité libre du tube interne (4).

10. Résonateur selon une quelconque des revendications 1 à 9, **caractérisé en ce que** pour des volumes d'installation prédéterminées, les chambres annulaires (2, 3, 17) et le tuyau intérieur (4) (23) avec ses ouvertures de paroi sont adaptées aux caractéristiques d'amortissement requises.
